Europäisches Patentamt

European Patent Office

Office européen des brevets

(11) Publication number: **0 435 144 A1**

# EUROPEAN PATENT APPLICATION

(21) Application number: 90124667.8

(22) Date of filing: 19.12.90

(51) Int. Cl.⁵: **B32B 17/10**, H05B 3/86

(30) Priority: 26.12.89 US 456711

(43) Date of publication of application:
03.07.91 Bulletin 91/27

(84) Designated Contracting States:
BE DE ES FR GB IT SE

(71) Applicant: PPG INDUSTRIES, INC.
One PPG Place
Pittsburgh Pennsylvania 15272(US)

(72) Inventor: Winter, John Anthony
106 North Jackson Avenue
Pittsburgh, PA. 15202(US)
Inventor: Bartrug, Bruce Alan
3271 Dorothy Street
Lower Burrell, PA 15068(US)

(74) Representative: Sternagel, Hans-Günther, Dr.
et al
Patentanwälte Dr. Michael Hann Dr. H.-G.
Sternagel Sander Aue 30
W-5060 Bergisch Gladbach 2(DE)

(54) **Notch sealant for heatable windshield.**

(57) An electrically heatable windshield includes an electroconductive coating on a major surface of a glass ply, interconnecting a pair of opposed bus bars. The bus bars extend to a notch area located along the periphery of the windshield to provide electrical access to a power source for the windshield. After electrical leads are connected to the bus bars, the notch area is filled with a flexible epoxy material to prevent moisture from diffusing into the notch area and electrically shorting the windshield.

EP 0 435 144 A1

# NOTCH SEALANT FOR HEATABLE WINDSHIELD

## BACKGROUND OF THE INVENTION

### 1. Field of the Invention

This invention relates to sealing edge portions of a laminated transparency and in particular to sealing the notch area of a heatable, laminated windshield against moisture.

### 2a. Technical Considerations

It has been known to pass electric current through a transparent conductive coating on a transparency in order to raise its temperature. Generally, the transparency includes a spaced pair of bus bars electrically interconnected by a conductive coating. The bus bars are usually connected by leads to a power source to distribute current from the power source through the coating. Where the transparency is a laminated windshield, passing current through the coating elevates the temperature of the laminate sufficient to melt snow or ice that has accumulated on an exposed surface of the windshield.

A heatable windshield usually includes a cut-out section, or notch area, along an edge of one of the plies of the windshield that exposes a lead portion of the bus bars and provides a location at which the power source can be connected to the windshield. The notch area must be sealed after electrical connection is made to the exposed leads to prevent moisture from entering the notch area, which in turn could short the windshield leads.

It would be advantageous to effectively seal the notch area of the heatable windshield against moisture.

### 2b. Patents of Interest

U.S. Patent Nos. 3,789,191 and 3,789,192 to Spindler teach a heated window with an electroconductive film interconnecting a pair of opposing bus bars. Lead wires extend into the laminate to provide power to the window. Electrical leads to a windshield temperature sensor are embedded within the plastic interlayer of the window.

U.S. Patent No. 3,790,752 to Boaz et al. teaches a heatable, laminated windshield in which an electrical connection is made within the windshield to a transparent interlayer which has a conductive coating thereon. The connection is sealed so that moisture cannot penetrate the laminate.

U.S. Patent Nos. 3,794,809 to Beck; 4,543,466 to Ramus; and 4,789,784 to Nikodem et al. teach an electrically heatable windshield with opposing bus bars that are electrically interconnected by an electroconductive coating on an interior surface of the windshield. In Beck, the leads to the bus bars extend outside of the windshield assembly. In Ramus and Nikodem et al., the leads extend into a cut-out portion, or terminal area, along an edge of the windshield. Electrical power is provided to the leads at the terminal area.

U.S. Patent No. 3,791,910 to Bowser teaches a room temperature vulcanizable mastic for hermetically sealing multiple glazed units. The glass plies are held in spaced apart relation by a marginal edge spacer extending around the periphery of the unit and a resilient, moisture-resistant strip is adhered about the periphery of the unit and the spacer to provide a secondary seal. The spacer element includes a dehydrator element in a moisture vapor transmittable material such as an epoxy resin.

U.S. Patent No. 4,046,951 to Stefanik teaches a laminated transparency with a composite edge sealing arrangement consisting essentially of a thin barrier layer of an organofluoro composition and a sealant layer having moisture resistant properties that will bond to the lamina of the transparency and the barrier layer.

U.S. Patent No. 4,121,014 to Shaffer teaches a transparent laminate with a plasticized polyvinyl acetal ply secured to a polycarbonate ply by an adhesive film of polyurethane or epoxy resin.

U.S. Patent No. 4,204,374 to Olson teaches an edge design for an impact resistant windshield. A bevel on the surface of the outboard ply about the windshield's perimeter is filled with a flexible sealant such as polyurethane, polysulfide, silicone, or the like to protect against delamination.

U.S. Patent No. 4,277,294 to Orcutt and 4,324,373 to Zibritosky teach a laminated window panel having a silicone bumper strip about its periphery to provide a barrier against moisture penetrating the interlayer material.

U.S. Patent No. 4,284,677 to Herliczek teaches a glazing unit which uses polyvinyl butyral as interlayer material and an edge seal in a glass laminate.

U.S. Patent No. 4,321,777 to Sauret et al. teaches an impact resistant laminated window having a U-shaped sealing member extending around the periphery of the window.

U.S. Patent No. 4,593,175 to Bowser et al. teaches a coating composition to prevent moisture from penetrating along a power cable of an electrically heated architectural glazing unit.

## SUMMARY OF THE INVENTION

The present invention teaches a laminate wherein an exposed surface portion is sealed with a flexible epoxy material to provide a moisture resistant seal that reduces moisture diffusion into the laminate. In one particular embodiment of the invention, a major surface of a first ply of the laminate includes a pair of opposing bus bars interconnected by an electroconductive coating. The bus bars extend to an electrical connection area along a peripheral edge of the laminate. A second ply overlays the first ply and includes a cut-out section at the connection area that exposes a portion of the bus bars. The exposed portions of the bus bars and first ply are coated with the flexible epoxy sealant material.

## BRIEF DESCRIPTION OF THE DRAWINGS

Figure 1 is a plan view of a heatable windshield incorporating features of the present invention, with portions removed for clarity.

Figure 2 is an enlarged view of the notch area of the windshield shown in Figure 1, with portions removed for clarity.

Figure 3 is a view taken along line 3-3 of Figure 2 showing the sealant of the present invention in the notch area of the windshield.

## DETAILED DESCRIPTION OF THE INVENTION

The description of the invention is taught in connection with a heatable, laminated transparency comprised of two glass plies bonded together by a thermoplastic interlayer and an electroconductive coating positioned between the plies. The preceding construction represents a typical heatable windshield construction, but it is understood that the invention is not limited to fabricating an automotive windshield but may be practiced in the fabrication of any laminated transparency where there is a problem of moisture diffusing into the interior of the transparency.

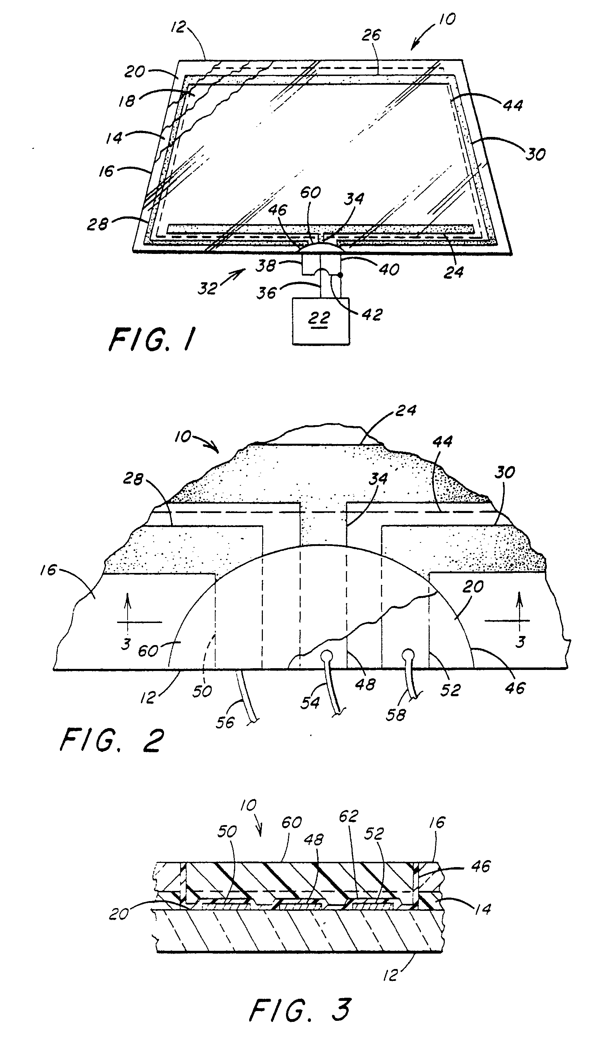

Referring to Figures 1 through 3, the transparency 10 is a heatable windshield which includes an outboard glass ply 12, i.e. the ply furthest from the vehicle interior, a plastic interlayer 14, which may be polyvinyl butyral as is commonly used for laminated windshields, and an inboard glass ply 16. Although not limiting in the present invention, in the preferred embodiment of the invention, the windshield 10 has a the heating arrangement including an electroconductive coating 18 preferably positioned on the inside surface 20 of the outboard glass ply 12. Various coatings may exhibit the necessary combination of transparency and electroconductivity required to serve as the heating element for the transparency 10. A preferred coating is similar to that disclosed in U.S. Patent No.

4,610,770 to Gillery, which teachings are hereby incorporated by reference. These coatings generally include one or more silver films between pairs of zinc stannate films, each of which may be applied sequentially by magnetron sputtering. In one particular embodiment of the invention, the coating taught in U.S. Patent No. 4,610,770 exhibits an approximate resistivity of about 7 to 8 ohms per square with a single silver film layer having a thickness of about 110 Angstroms.

Electrical power from a power supply 22 passes to the electroconductive coating 18 through a bus bar and lead arrangement which, although not limiting in the present invention, is similar to the double feed bus bar arrangement disclosed in U.S. Patent No.4,820,902 to Gillery, which teachings are incorporated by reference. Referring to Figure 1, a bottom bus bar 24 and top bus bar 26 are positioned along surface 20 of the glass ply 12 in contact with the coating 18. The electrical connection to the upper bus bar 26 is made by a pair of extensions of the bus bar 26, i.e. leads 28 and 30, each extending along opposing side portions and bottom edge of the windshield 10 to a terminal area 32. Electrical access to the bottom bus bar 24 is had by a lead 34 which extends from the bus bar 24 to the terminal area 32. Although not limiting in the present invention, the electrical connections to the bottom bus bar 24 and to the top bus bar 26 via leads 28 and 30 are preferably made along the bottom edge of the windshield 10 at the terminal 32 as illustrated in Figures 1 and 2, but it should be appreciated that the connections may be made to the windshield 10 at any convenient location.

With continued reference to Figure 1, wire 36 connects the bottom bus bar 24 to one pole of an electrical power source 22. Leads 28 and 30 leading to the top bus bar 26 are connected in common to the opposite pole of power source 22 by means of wires 38 and 40 and jumper wire 42.

The leads 28 and 30 are electrically insulated from the coating 18 and bottom bus bar 24 in any convenient manner known in the art to ensure that the power to the coating 18 is delivered only through the bus bars 24 and 26. Although not limiting in the present invention, the edge of the coating 18 is spaced from edge of the transparency 10, as indicated by line 44 in Figures 1 and 2 and the leads 28 and 30 are positioned within this uncoated, marginal area.

The bus bars and leads are preferably made of a silver containing ceramic frit material, as is well known in the art, and may be applied in any convenient manner, e.g. screen printing onto the glass surface 20 of the glass ply 12. After printing, the frit material is heated, or "fired", to melt the frit material and fuse it onto the glass surface. An opaque ceramic enamel border (not shown) may optionally be applied on surface 20 of the glass ply 12 to hide portions or all of the bus bars 24 and 26 and leads 28 and 30.

After the bus bars and leads are fired onto the glass ply 12 and the coating 18 is applied to surface 20, the interlayer 14 is positioned between the glass sheets 12 and 16 and the entire assembly is laminated in any convenient manner available in the art, to form a unitary structure, i.e. a laminated windshield. With particular reference to Figures 2 and 3, inner ply 16 includes a cut-out or notch area 46 to expose portion 48 of lead 34 and portions 50 and 52 of leads 28 and 30, respectively, and provide access for electrical connection to the bus bars 24 and 26 from the power source 22 (shown only in Figure 1). In particular, referring to Figure 2, wires 54, 56, and 58 are electrically interconnected to lead portions 48, 50, and 52, respectively, in any convenient manner known in the art, e.g. soldering.

With continued reference to Figures 2 and 3, a sealant 60 is used to fill the notch area 46 to protect the notch area 46 against the environment. In particular, sealant 60 prevents moisture from diffusing into the notch area 46 and shorting the electrical connection to leads 48, 50 and 52 of the windshield 10. In selecting a sealant, care should be taken so as not to use a material that adversely affects the silver lead portions 48, 50, and 52, or any exposed coating 18 in the notch area 46. In particular, sulfur containing sealant materials should be avoided because the sulfur or sulfur compounds may react with the silver, forming silver sulfides which will reduce the electroconductivity of the leads and/or coating in the notch area 46. Since electrical power to the windshield 10 will be provided through the notch area 46, the sealant materials should also be non-electroconductive to prevent shorting of the windshield circuitry by electrically interconnecting the lead portion 48 with the adjacent lead portions 50 and 52. In addition, the sealant 60 should not react with the plastic interlayer 14. Lastly, the sealant material must be sufficiently resilient so as to not induce any undue stresses on the windshield in the notch area 46.

The sealant 60 can be applied either before or after lamination. It should be noted that if the sealant 60 is applied before lamination it must be able to survive the elevated temperatures and pressures of a laminating cycle, which for automotive windshields are typically on the order of about 275°F (135°C) and 200 psi (1.38 x 10$^6$ Pa). In addition, the sealant material preferably should not give off toxic fumes during lamination.

To provide the required moisture seal, the present invention uses a flexible epoxy material for the sealant 60. In one particular embodiment of the invention, the edge seal material is a flexible epoxy sealant available from BF Goodrich Company, Ohio, sold under the trade name Plastilock. This material is a thixotropic, two-part, lightweight, room temperature curing epoxy sealant that remains flexible at low temperatures. The sealant 60 is applied to the notch area 46 in any convenient manner and although not limiting to the present invention, in a preferred embodiment of the invention, a piece of tape may be used to cover the notch area 46 with the flexible epoxy sealant 60 being applied in the space between the tape and the surface 20 of outer glass sheet 12. As an alternative, the flexible epoxy sealant may be applied to the notch area 46 using a caulking gun before laminating the assembly 10. A putty knife is used to smooth the surface of the sealant 60 before it begins to cure. After curing, the assembly 10 is laminated.

Referring to Figure 3, the notch area 46 is preferably primed with a surface treatment 62 that promote adhesion of the flexible epoxy material to the glass and leads in the notch area. Although not limiting in the present invention, one particular type of surface treatment is a silane solution available from Union Carbide under the tradename Union Carbide® A1100.

Testing was conducted to compare the performance of unprimed flexible epoxy material to silicone as a moisture barrier. Testing performed in accordance with ASTM E96-80 comparing Plastilock® 435 sealant with Dow Corning® 982 silicone sealant showed that the flexible epoxy was significantly less permeable to moisture than the silicone, and in particular the epoxy was over seven times less permeable than the silicone after 168 hours of exposure to either water or water vapor. Additional testing in accordance with ASTM F372-78 comparing the moisture barrier characteristics of Plastilock® 425 with Dow Corning® silicone sealant showed the epoxy to be about three times less permeable to moisture than the silicone.

The use of the flexible epoxy material to fill the notch area 46 of the assembly 10 provides additional advantages over silicone sealants. For example, polyurethane based adhesives are typically used to install an automotive windshield. The adhesive is placed about the periphery of the windshield assembly 10 to secure it in place. In windshield configurations where the notch area 46 is located such that the polyurethane based adhesive is applied to a portion of the notch area 46, it has been observed that the adhesive will not bond to a silicone sealant. However, polyurethane based adhesives will bond to the flexible epoxy sealant so that the windshield assembly 12 can be properly secured to the vehicle about its periphery.

The use of the flexible epoxy material is also preferred over the use of polyurethane as a notch sealant material. Generally, the epoxy is more resistant to chemical attack from acids, alcohols, and alkalies than the polyurethane. In addition, it is believed that during curing, moisture in the polyurethane may generate $CO_2$ gas within the sealant which may reduce its effectiveness as a moisture seal. Furthermore, if the polyurethane is applied to the notch area 46 prior to lamination, during exposure to laminating temperatures of about 275° F (135° C), depending on its composition, the polyurethane may release potentially toxic gas, such as diisocyanates, and volatile combustion products such as $CO$, $CO_2$, $NO_x$, and $HCN$. It is not expected that the epoxy material will release such potentially toxic compounds when exposed to laminating temperatures and pressures.

The forms of the invention shown and described in this specification represents illustrative preferred embodiments and it is understood that various changes may be made without departing from the spirit of the invention as defined in the following claimed subject matter.

**Claims**

1. In a method of forming a laminate, including the steps of applying an electroconductive coating on a surface of a first sheet, positioning a second sheet in an overlaying relation to said first sheet such that said coating is positioned therebetween, and securing said first sheet to said second sheet, the improvement comprising:
   providing electrical access to said coating;
   providing an opening in said second sheet to expose at least a portion of said electrical access;
   securing electrical leads to said exposed portions of said electrical access and;
   coating said electrical access with a flexible epoxy material to reduce moisture diffusion to said electrical access.

2. The method as in claim 1 wherein said electrical access providing step includes providing first and second electroconductive bus bars along opposing edges of and interconnected by said coating, wherein a portion of each of said bus bars extends to a peripheral edge of said first sheet and said opening providing step includes providing a notch area along a peripheral edge of said second sheet in the vicinity of said portions of said bus bars such that the bus bar portions are exposed after said positioning step.

3. The method as in claim 2 wherein said coating step further includes filling said notch area with said sealant.

4. The method as in claim 3 wherein said coating step includes coating said notch area prior to said securing step.

5. The method as in claim 3 wherein said coating step includes coating said notch area after said securing step.

6. The method as in claim 3 further including the step of applying a primer to said exposed portions prior to said coating step.

7. In a transparency including a first dielectric substrate, an electroconductive member on a major surface of said first substrate, means to provide electrical access to said member along said surface of said substrate, and a second dielectric substrate overlaying and secured to said surface of said first substrate such that selected portions of said electrical access means are positioned between said first and second substrates and other portions of said electrical access means are exposed, the improvement comprising:
   a flexible epoxy sealant covering said exposed portions of said electrical access means.

8. The transparency as in claim 7 wherein said electroconductive member is an electroconductive coating on said surface of said first substrate and said electrical access means includes first and second electroconductive bus bars positioned along opposing edges of and interconnected by said coating and at least one opening in said second substrate to expose said other portions of said bus bar.

9. The transparency as in claim 8 wherein said other portions of said bus bars extend to a peripheral edge of said first substrate and said opening is a notch area along a peripheral edge of said second substrate at said exposed portions of said bus bars and further wherein said flexible epoxy sealant substantially fills said notch area.

10. The transparency as in claim 9 further including a primer layer between said flexible epoxy sealant and at least a portion of said notch area.

11. The transparency as in claim 10 wherein said primer is a silane based primer.

FIG. 1

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,A | US-A-3 790 752 (BOAZ ET AL)<br>* the whole document *<br>– – – | 1,7,2-6,<br>8-11 | B 32<br>B 17/10<br>H 05 B 3/86 |
| A | US-A-4 782 216 (WOODARD)<br>* the whole document *<br>– – – – – | 2,8,9 | |
| | | | **TECHNICAL FIELDS SEARCHED (Int. Cl.5)**<br><br>B 32 B<br>H 05 B |

The present search report has been drawn up for all claims

| Place of search | Date of completion of search | Examiner |
|---|---|---|
| The Hague | 25 March 91 | DE JONGE S.J.P. |